(19) Europäisches Patentamt
European Patent Office
Office européen des brevets

(11) Publication number : 0 547 809 A1

# (12) EUROPEAN PATENT APPLICATION

(21) Application number : 92311052.2

(22) Date of filing : 03.12.92

(51) Int. Cl.[5] : **C08L 67/02,** C08K 13/02, C08L 79/08, // (C08L67/02, 79:08), (C08K13/02, 5:02, 3:34, 5:05)

(30) Priority : **18.12.91 US 808896**

(43) Date of publication of application : **23.06.93 Bulletin 93/25**

(84) Designated Contracting States : **DE FR GB IT NL**

(71) Applicant : **GENERAL ELECTRIC COMPANY**
**1 River Road**
**Schenectady, NY 12345 (US)**

(72) Inventor : **Liu, Ping Yuan**
**124 Tanager Court**
**Naperville, Illinois 60565 (US)**
Inventor : **Wright, Don Edd**
**RR No. 3**
**Sturgis, Kentucky 42459 (US)**

(74) Representative : **Pratt, Richard Wilson et al**
**London Patent Operation G.E. Technical Services Co. Inc. Essex House 12/13 Essex Street**
**London WC2R 3AA (GB)**

## (54) Thermoplastic compositions.

(57) Flame retardant polyester compositions having improved processability comprise a polyester resin, preferably a poly(butylene terephthalate) resin, a halogenated flame retardant, a silicate mineral filler, a neoalkoxy titanate, polyetherimide ester resin and, optionally, a glass reinforcing agent.

EP 0 547 809 A1

This invention relates to flame retardant thermoplastic molding compositions, particularly flame retardant thermoplastic polyesters, having incorporated therein a neoalkoxy titanate. More particularly, disclosed are flame retardant polyester compositions exhibiting improved processability comprising a polyester resin, preferably a poly(butylene terephalate) resin; a flame retardant amount of a halogenated flame retardant; a silicate mineral filler; a neoalkoxy titanate, a polyethermide ester resin and, optionally, a glass reinforcing agent.

It has been unexpectedly discovered that the processing characteristics of the composition, as exemplified by a lower melt viscosity, are markedly improved by the addition of a neoalkoxy titanate and a polyetherimide ester resin to the composition.

## BACKGROUND OF THE INVENTION

High molecular weight polyesters and particularly polyesters and copolyesters of glycols and terephthalic or isophthalic acid have been available for a number of years. These are described inter alia in Winfield et al, U.S. Pat. No. 2,465,319 and in Pengilly, U.S. Pat. No. 3,047,539. These patents disclose that the polyesters are particularly advantageous as film and fiber-formers.

With the development of molecular weight control, the use of nucleating agents and two-step molding cycles, poly(ethylene terephthalate) has become an important constituent of injection moldable compositions. Further, poly(1,4-butylene terephthalate), because of its very rapid crystallization from the melt, is uniquely useful as a component in such compositions. Work pieces molded from such polyester resins, in comparison with other thermoplastics, offer a high degree of surface hardness and abrasion resistance, high gloss, and lower surface friction.

Furthermore, in particular, poly(1,4-butylene terephthalate) is much simpler to use in injection molding techniques than poly(ethylene terephthalate). For example, it is possible to injection mold poly (1,4-butylene terephthalate) at lower mold temperatures of from about 230° C to 260° C to produce highly crystalline, dimensionally stable moldings in short cycle times. On account of the high rate of crystallization, even at low mold temperatures, no difficulty is encountered in removing the moldings from the molds.

However, it has been discovered that it is difficult to render such polyester resins, modified or unmodifed, flame retardant without sacrificing some of their inherent superior physical properties. Specifically, the use of conventional flame retardant additives may tend to prove detrimental to certain physical properties of the flame retardant polyester composition. One such property that may be hindered is the material processability, as exemplified in part by the melt viscosity, of the resulting flame retardant composition.

In summary, it has been unexpectedly discovered that specified flame retardant polyesters can be compatibly and advantageously modified with a neoalkoxy titanate and a polyetherimide resin.

The polyesters utilized in the present invention are linear or branched polymeric glycol terephthalates or isophthalates having repeating units of the general formula:

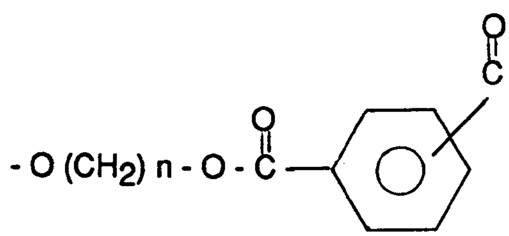

wherein n is an integer of from 2 to 10, preferably from 2 to 4, and mixtures of such esters, including copolyesters of terephthalic and isophthalic acids of up to about 30 mole % isophthalic units.

Preferred polyesters are poly(ethylene terephthalate), poly(butylene terephthalate), and mixtures thereof, most preferably poly(1,4-butylene terephthalate). They can be prepared by known techniques such as by the alcoholysis of esters of the phthalic acid with a glycol and subsequent polymerization, by heating glycols with the free acids or with halide derivatives thereof, or by similar processes. These are described in U.S. Pat. Nos. 2,465,319 and 3,047,539, and elsewhere. In addition to the phthalate, minor amounts, e.g., from about 0.5 to 15% by weight, of other aromatic dicarboxylic acids, such as naphthalene dicarboxylic acid, can be present in the polyester component. The reactants can also include amounts of tri-or polyfunctional branching agents, such as trimethylolpropane, pentaerythritol, and trimethyl trimesate.

The flame retardant additives within the scope of the present invention include compounds, oligomers, and polymers represented by the formula set forth in column 8 of U.S. Patent No. 4,639,486; halogenated diphenyl ethers, containing two to ten halogen atoms, as exemplified in U.S. Patent No. 4,639, 486 and halogenated

diphenyl polyalkylene ethers of formula 11 as set forth in U.S. Patent No. 4,639,486; the halogenated polystyrenes, especially the aromatically bound di- and tri-bromopolystyrenes; the halogenated polyphenylene oxides, especially the polydibromophenylene oxides; and the halogenated polyacrylates, especially those derived from the acrylic and methacrylic acids and esters thereof, particularly the benzylesters thereof, having aromatically bound halogen, e.g. bromline.

Other suitable polymeric flame retardants are those derived from, at least in part, halogenated dihydric phenols. These include high and low molecular weight polycarbonates and copolycarbonates as well as the diglycidyl ethers of dihydric phenols.

The molecular weight of the polymeric flame retardants may vary widely and are generally from 2000 to 40,000 molecular weight. Preferred high molecular weight flame retardant polymers will have molecular weights from 20,000 to 40,000. Also, the halogen content may vary widely. The preferred halogen content is from 20% to greater than 85%, preferably from 35 to 75%.

Those skilled in the art are well aware that the amount by which the flame retardant additive will be used will vary with the nature of the resin and efficiency of the additive. In general, however, the amount of additive will be from 3 to 50 parts by weight, preferably from 10 to 40 parts, and most preferably from 15 to 30 parts, of the flame retardant per 100 parts of the total composition.

The manner of adding the flame additives to the polyester compositions of the present invention is not critical; suitable methods are conventional and would be obvious to those skilled in the art.

In addition to the flame retardant compositions used herein, one may also use, and it is preferred to use, a flame retardant synergist, particularly the inorganic or organic antimony compounds. The type of antimony compound used is not critical, the choice being primarily based on economics. Especially preferred are antimony oxide, antimony trioxide and sodium antimonate. For improvements in dispersions, processing, and/or handling, when antimony oxide is utilized it is preferred that it be employed in a concentrated mix, in a manner known to those skilled in the art, with a compatible polymer, e.g., a polyester such as poly(1,4-butylene terephthalate). This concentrate is referred to herein, and in the art, as A.O.C. These optional flame retardant synergists may be used in an amount of from about 1 to 15 parts, preferably from about 2 to 10 parts, by weight per 100 parts of the total composition.

Finally, the flame retardant mixture may also optionally contain an effective amount of a drip inhibitor. This amount will generally be from 0.01 to about 5 parts by weight, preferably from about 0.05 to about 2.0 parts by weight, based on 100 parts of the total composition. Suitable non-dripping agents are well known and widely available. They include the fumed and colloidal silicas and polytetrafluoroethylene resins. Especially preferred are the polytetrafluoroethylene resins, most preferably TEFLON 6 from E.I. DuPont.

The polyetherimide ester elastomers utilized in the invention contain imide groups, polyether groups, and ester groups in the polymer chain. They comprise the reaction products of:

(a) a diol;

(b) a dicarboxylic acid or its ester forming reactive derivative; and

(c) a material selected from

- (i) a set of reactants comprising a high molecular weight (oxyalkylene) diamine, and a tricarboxylic acid or its derivative, and
- (ii) a high molecular weight polyoxyalkylene diimide diacid.

Suitable diols (i) include saturated and unsaturated aliphatic and cycloaliphatic dihydroxy compounds and aromatic dihydroxy compounds. And these diols have a molecular weight of about 250 or less. When used herein, the term "diol" and "low molecular weight diol" should be construed to include equivalent ester forming derivatives thereof provided, however, that the aforementioned molecular weight requirement pertains to the diols only and not to their ester forming derivatives. Exemplary of ester forming derivatives of diols there may be given the acetates of the diols as well as, for example, ethylene oxide or ethylene carbonate for ethylene glycol.

The preferred saturated and unsaturated aliphatic and cycloaliphatic diols are those having from 2 to about 15 carbon atoms. Exemplary of these diols are ethylene glycol, propanediol, butanediol, pentanediol, 2-methyl propanediol, 2,2-dimethyl propanediol, hexanediol, decanediol, 1,2-, 1,3- and 1,4- cyclohexane dimethanol, butenediol and hexenediol. Especially preferred are 1,4-butanediol and mixtures there of with hexanediol, 1,4-cyclohexane dimethanol, or butenediol, most preferably 1,4-butanediol.

Aromatic diols suitable for use in the practice of the present invention are generally those having from 6 to 15 carbon atoms. Included among the aromatic dihydroxy compounds are resorcinol, hydroquinone, 1,5-dihydroxy naphthalene, 4,4'-dihydroxy naphthalene, 4,4'-dihydroxy diphenyl, bis(p-hydroxy phenyl) methane and bis(p-hydroxy phenyl) -2,2-propane.

Especially preferred diols are the saturated aliphatic diols, mixtures thereof, and mixtures of a saturated diol(s) with an unsaturated diol(s), wherein each diol contains from 2 to about 8 carbon atoms. Where more than one diol is employed, it is generally preferred that at least about 60 mole %, based on the total diol content,

be the same diol, more preferably at least 80 mole %. As mentioned above, the preferred compositions are those in which 1,4-butanediol is present in a predominant amount. Most preferably, 1,4-bi.itanediol is the only diol.

Dicarboxylic acids (b) which are suitable for use in the practice of the present invention are aliphatic, cycloaliphatic, and/or aromatic dicarboxylic acids. These acids are preferably of a low molecular weight, i.e., having a molecular weight of less than about 300. However, in some cases higher molecular weight dicarboxylic acids may be used. The term "dicarboxylic acids" as used herein, includes equivalents of dicarboxylic acids having two functional carboxyl groups which perform substantially like dicarboxylic acids in reaction with glycols and diols in forming polyesters. These equivalents include esters and ester forming reactive derivatives, such as acid halides and anhydrides. The molecular weight preference mentioned above pertains to the acid and not to its equivalent ester or ester-forming derivatives. Thus, an ester of a dicarboxylic acid having a molecular weight greater than about 300 or an acid equivalent of a dicarboxylic acid having a molecular weight greater than about 300 are included provided the acid has a molecular weight below about 300. Additionally, the dicarboxylic acids may contain any substituent groups(s) or combinations which do not substantially interfere with the polymer formation and the use of the polymer of this invention.

Aliphatic dicarboxylic acids, as the term is used herein, refer to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radical such as -0- or $-SO_2-$.

Representative aliphatic and cycloaliphatic acids which can be used for this invention are sebacic acid, 1,2-cyclohexane dicarboxylic acid, 1, 3-cyclohexane dicarboxylic acid, adipic acid, glutaric acid, succinic acid, oxalic acid, dimer acid, 4-cyclohexene-1, 2-dicarboxylic acid, 2-ethylsuberic acid, tetramethylsuccinic acid, cyclopentanedicarboxylic acid, decahydro-1,5 naphthalene dicarboxylic acid, 4,4'-bicyclohexyl dicarboxylic acid, decahydro-2,6 naphthalene dicarboxylic acid, 4,4 methylenebis (cyclohexane carboxylic acid), 3,4-furan dicarboxylic acid, and 1,1-cyclobutane dicarboxylic acid. Preferred aliphatic acids are cyclohexane dicarboxylic acids, sebacic acid, glutaric acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl)methane, oxybis(benzoic acid), ethylene-1,2-bis(poxybenzoic acid), 1,5-naphthalene dicarboxylic acid, 2,naphthalene dicarboxylic acid, 2,7-naphthalene dicarboxylic acid, phenanthrene dicarboxylic acid, anthracene dicarboxylic acid, 4,4'-sulfonyl dibenzoic acid, and halo and $C_1$ -$C_{12}$ alkyl, alkoxy, and aryl ring substitution derivatives thereof. Hydroxy acids such as p(beta-hydroxyethoxy) benzoic acid can also be used provided an aromatic dicarboxylic acid is also present.

Preferred dicarboxylic acids for the preparation of the polyetherimide esters of the present invention are the aromatic dicarboxylic acids, mixtures thereof and mixtures of one or more dicarboxylic acids with an aliphatic and/or cycloaliphatic dicarboxylic acid, most preferably the aromatic dicarboxylic acids. Aromatic acids having 8-16 carbon atoms are preferred, particularly the benzene dicarboxylic acids, i.e., phthalic, terephthalic and isophthalic acids and their dimethyl derivatives. Especially preferred is dimethyl terephthalate.

Finally, where mixtures of dicarboxylic acids are employed in the practice of the present invention, it is preferred that at least about 60 mole %, preferably at least 80 mole %, based on 100 mole % of dicarboxylic acid (b) be the same dicarboxylic acid or ester derivative thereof. As mentioned above, the preferred compositions are those in which dimethylterephthalate is the predominant dicarboxylic acid, most preferably when dimethylterephthalate is the only dicarboxylic acid.

The polyetherimide ester polymers of the present invention may be prepared by a one-pot synthesis involving the reaction of the diol (i), the dicarboxylic acid (b), the high molecular weight poly(oxyalkylene) diamine, and the tricarboxylic acid or its derivative. In such a synthesis the polyoxyalkylene diimide diacid (ii) is formed in-situ by the reaction of the poly(oxy alkylene) diamine with the tricarboxylic acid.

The poly(oxyalkylene) diamines suitable for use in the present invention may be presented by the following general formula

I. $H_2N\text{-}G\text{-}NH_2$

wherein G is a long chain poly(oxy)radical. These polyether diprimary diamines are available commercially from Texaco Chemical Company under the trademark JEFFAMINE®. In general they are prepared by known processes for the amination of glycols. For example, they may be prepared by aminating the glycol in the presence of ammonia, Raney nickel catalyst and hydrogen as set forth in Belgian Pat. No. 634, 741. Alternatively, they may be prepared by treating glycol with ammonia and hydrogen over a Nickel-Copper-Chromium catalyst as

taught by U.S. Patent No. 3,654,370. Other methods for the production thereof include those taught by U.S. patent Nos. 3,155,728 and 3,236,895 and French Nos. 1,551,605 and 1,466,708.

The long chain ether diamines suitable for use herein are polymeric diamines having terminal (or as nearly terminal as possible) amine groups and an average molecular weight of from 600 to 12,000 preferably from 900 to 4,000. Additionally, the long chain ether diamines will generally have a carbon-to oxygen ratio of from about 1.8 to about 4.3.

Representative long chain ether diamines are the poly(alkylene ether) diamines including poly(ethylene ether) diamine, poly(propylene ether) diamine, poly (tetramethylene ether) diamine; and aminated random or block copolymers of tetrahydrofuran with minor amounts of a second monomer such as ethylene oxide, propylene oxide, and methyl tetrahydrofuran (used in proportions such that the carbon-to-oxygen mole ratio in the diamine does not exceed about 4.3 to 1). Polyformyl diamines prepared by reacting formaldehyde with diols such as 1,4-butanediol and 1,5-pentanediol and subsequently aminating are useful. Especially preferred poly(alkylene ether) diamines are poly(propylene ether) diamine, poly(tetramethylene ether) diamine, and the poly(ethylene) glycols which are end-capped with poly(propylene ether) and/or propylene oxide and subsequently aminated.

In general, the polyoxyalkylene diamines useful in the practice of the present invention have an average molecular weight of from 600 to 12,000, preferably from 900 to 4,000.

The aforesaid tricarboxylic acid may be almost any carboxylic acid anhydride containing an additional carboxylic acid anhydride containing an additional carboxylic group or the corresponding acid thereof containing two imide-forming vicinal carboxyl groups in lieu of the anhydride group. Mixtures thereof are also suitable. The additional carboxylic group must be esterifiable.

Trimellitic anhydride is preferred as the tricarboxylic acid component. These tricarboxylic acid materials can be characterized by the following general formula

II. 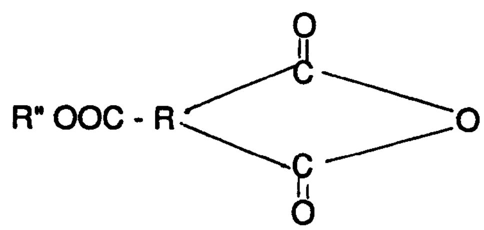

wherein:

R is a trivalent organic radical, preferably a $C_1$-$C_{20}$ aliphatic or cycloaliphatic, or $C_6$-$C_{20}$ aromatic trivalent radical;

R" is hydrogen or a monovalent organic radical which is preferably selected from $C_1$-$C_{12}$ aromatic radicals, e.g., benzyl; R' is most preferably hydrogen.

In the preparation of the instant polyetherimide ester polymers sufficient amounts of diol versus dicarboxylic acid, and tricarboylic acid versus diamine must be present, as recognized in the art, to allow for substantially complete polymerization.

This type of one-pot reaction involving the reactions of a diol component, a dicarboylic acid component, a poly(oxy alkylene) diamine component, and a tricarboxylic acid component is described in U.S. Patent No. 4,556,688 to McCready et al. In this type of one-pot reaction the amount of diol employed will be, in general, a molar excess, preferably abut 1.5 molar equivalents, based on the combined molar equivalents of the dicarboxylic acid and of the total moles of the tricarboxylic acid. The amount of the tricarboxylic acid employed will preferably be about two molar equivalents based on the number of moles of the poly(oxy alkylene) diamine. Obviously, less than two molar equivalents would result in incomplete imidization of the diamine resulting in potentially poorer properties. Conversely, greater than two molar equivalents of the tricarboxylic acid may lead to cross-linking and/or branching of the polymer. Generally, mole ratios of 2 moles tricaboxylic acid to 0.85 to 1. 15 moles of poly(oxyalkylene) diamine yield useful polymers.

The amount by which the diamine and the dicarboxylic acid are used is generally not critical in forming the polyetherimide esters of the present invention. However, preferred amounts of the poly (oxy alkylene) diamine and dicarboxylic acid used are such that the weight ratio of the theoretical amount of the polyoxyalkyene diimide diacid, formable from the poly (oxy alkylene) diamine and the tricarboxylic acid, to the dicarboxylic acid is from 0.002 to 2.0:1, preferably from 0.01 to 2.0:1, and more preferably from 0.25 to 2.0, and most preferably from 0.4 to 1.4. The actual weight ratio will be dependent upon the specific poly (oxy alkylene) diamine and tricarboxylic acid used and more importantly upon the desired physical and chemical properties of the resultant polyetherimide ester. In general, the lower ratio of the theoretical amount of polyoxyalkylene diimide diacid to dicarboxylic acid the better the strength, crystallization and heat distortion properties of the polymer. Alternatively, the higher the ratio, the better the flexibility, tensile set and low temperature impact characteristics.

The polyetherimide esters may also be prepared by a two-pot synthesis involving the reaction of the diol, the dicarboxylic acid, and the polyoxyalkylene diimide diacid. Such a reaction is described in U.S. Patent No. 4,556,705 to McCready. In this process the poly (oxy alkylene) diamine is reacted with the tricarboxylic acid to form a polyoxyalkylene diimide diacid, and the preformed polyoxyalkylene diimide diacid is reacted with the diol and the dicarboxylic acid to form the polyetherimide ester polymers.

The polyoxyalkylene diimide diacid may be represented by the general formula

III. 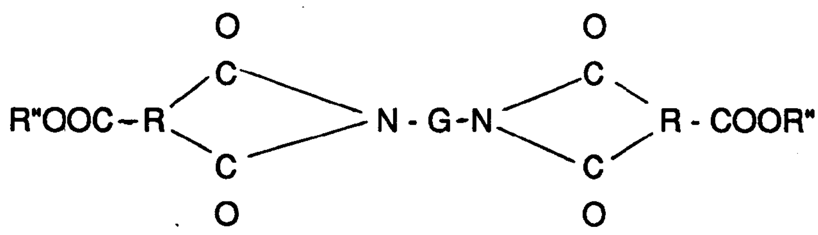

wherein G, R and R" are as defined hereinafore.

The polyoxyalkylene diimide diacids of Formula III suitable for use herein are high molecular weight diimide diacids having an average molecular weight greater than about 700, preferably greater than about 900. They may be prepared by the imidization reaction of one or more tricarboxylic acids containing two vicinal carboxyl groups or an anhydride group and an additional carboxyl group which must be esterifable with the high molecular weight poly (oxy alkylene) diamine. These polyoxyalkylene diimide diacids and processes for their preparation are disclosed in U.S. Patent No. 4,556,705.

It is also possible, as described in U.S. Patent No. 4,556,688, to prepolymerize the aromatic dicarboxylic acid and the diol to form a prepolyester, and then react this prepolyester with either the diimide diacid or with tricarboxylic acid and the poly (oxy alkylene) diamine. Forming the prepolyester can be achieved by conventional esterification techniques such as those described in U.S. Patent Nos. 2,465,319 and 2,910,466.

In its preferred embodiment, the polyetherimide esters of the instant invention comprise the reaction products of dimethylterephthalate, optionally with up to 40 mole percent of another dicarboxylic acid or its ester forming derivative; butane diol, optionally with another diol such as butene diol, hexanediol, or cyclohexane dimethanol; and either a poly (oxy alkylene) diamine having an average molecular weight of from 600 to 12,000, preferably from 900 to 4,000, and trimellitic anhydride, or a polyoxyalkylene diimide diacid.

In the process of the present invention, particularly where all of the reactants are charged to the reactor together or where the polyoxyalkylene diimide diacid is performed and excess tricarboxylic and is present, a minor amount of the tricarboxylic acid or anhydride may read with available hydroxyl groups and ultimately function as a branching agent in the finished polymer. Within limits, the degree of branching in the finished polymer can be controlled by varying the mold ratio of tricarboxylic acid to poly(oxy alkylene) diamine. An excess of diamine reduces the degrees of branching, while an excess of the tricaboxylic acid increases branching. In addition to controlling branching by introducing a monofunctional reactant such as benzoic acid in minor amounts.

With reference to branching, it should be noted that polymers of this invention, when prepared from preformed diimide diacid, are substantially free of branching. If branching is desired, one needs only to introduce a branching agent such as trimellitic anhydride, along with the preformed diimide diacid. The amount of branching agent will generally be less than about 0.15 moles per mole of diimide diacid. Useful branching agents other than trimellitic anhydride include trimethyl trimellitate, glycerol, trimethylol propane, trimesic acid and its esters, and the like.

The polyetherimide esters may be prepared by conventional esterification/condensation reactions for the production of polyesters. These processes are described, inter alia, in U.S. Patents Nos. 3,763,109; 3,651,014; 3,801,547; 4,556,705, and 4,556,688.

The polyetherimide esters of the invention contain at least the following two recurring structural units;

IV $$(-O-\overset{O}{\overset{\|}{C}}--A-\overset{O}{\overset{\|}{C}}-O-R1-)$$

and

V. 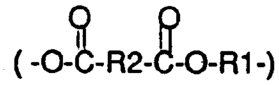

wherein:

A is the residue of the polyoxyalkylene diimide diacid, i.e.,

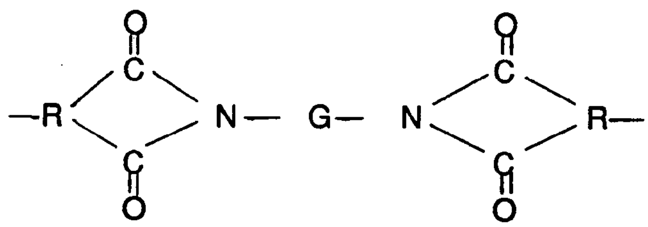

R1 is the residue of the diol absent the two hydroxyl groups.

R2 is the residue of the dicarboxylic acid absent the two carboxyl groups, and:

G is as defined here in before.

Additionally, while not required, it is customary and preferred to utilize a catalyst or catalyst system in the process for the production of the present polyetherimide esters. These types of catalysts are set forth in U.S. Patent Nos. 4,556, 705 and 4,566,688.

The composition of the present invention also contains a silica type mineral filler. The composition may contain from 10 to 60 parts by weight, preferably from 15 to 50 parts by weight, and most preferably from 18 parts to 35 parts by weight, of a silica type mineral filler based on 100 parts by weight of the total composition. Examples of suitable silica mineral fillers that can be utilized in the present invention include aluminum silicates, calcium silicate, clays, fumed silica, kaolin, mica, pyrogenic silica, and talc. The preferred mineral filler utilized in the present invention is talc.

The neoalkoxy titanate compounds are described in the chapter entitled "Neoalkoxy Titanates", in Bulletin No. Kr-1084L-4, "Titanate, Zirconate and Aluminate Coupling Agents", Revised 1987, published by Kenrich Petrochemicals Inc.) are the neopentyl (diallyl) oxy titanates. Most preferred is neopentyl (diallyl) oxy, tri (dioctyl) phosphate titanate, which is manufacture by Kenrich Petrochemicals Inc. under the tradename LICA 12. The neoalkoxy titanate processing aid is preferably compounded in a carrier to aid in its distribution throughout the polymer system of the present invention. Any compatible carrier can be employed for this purpose, although the preferred carriers are ethylene vinyl acetate or ethylene ethyl acetate. The preferred ratio of the neoalkoxy titanate to the carrier is from 10 to 30 parts of neoalkoxy titanate for 100 parts of neolkoxy titanate and carrier, with a preferred range of from about 15 to 25 parts neoalkoxy titanate for 100 parts of neoalkoxy titanate and carrier. Any amount of neoalkoxy titanate that will serve to improve the physical properties of the final composition is suitable for use herein. However, the preferred range of the neoalkoxy titanate utilized in the present invention will be from 0.02 weight percent to 1.5 weight percent of the total composition, and preferably from 0.1 weight percent to 1.0 weight percent, and most preferably from 0.2 weight percent to 0.8 weight percent of the total composition. It has been discovered, surprisingly, that at weight parts above four weight percent of the neoalkoxy titanate, the melt viscosity of the composition is equivalent to what it was at when no neoalkoxy titanate was utilized therein. It has also been surprisingly discovered that when the melt viscosity of the resulting composition was decreased through the use of the neoalkoxy titanate the strand integrity, contrary to general experience, is increased to improve the processability of the final composition. This is very surprising because strand integrity, which is directed to the integrity of the strands of the entire composition, is a function of melt strength. It is known that melt strength is a component of melt viscosity, therefore, typically it would be expected that when melt viscosity is decreased the melt strength will also be decreased. In the present invention, the opposite occurs, in that a decrease in melt viscosity does not bring about a corresponding decrease in strand integrity. This combination of properties is unexpected.

According to the present invention, the polyester resin component of the composition of the present invention will comprise at least about 15 weight percent, generally 20 to 30 weight percent, preferably from 23 to 27 weight percent, of the total composition. As indicated, the polyester component of the composition can be comprised of more than one polyester resin. The polyetherimide ester elastomer component of the composition of the present invention will generally be advantageously utilized in amounts ranging from 5 weight percent to 30 weight percent, preferably 8 to 25 weight percent and most preferably 10 to 20 weight percent of the total composition.

The components of the composition of the present invention can be intimately blended in a number of procedures. In one way, the flame retardant, silica filler, neoalkoxy titanate compound, polyetherimide ester elastomer and any of the optional components of the invention are put into a dry tumbler with the dry polyester resin for better mixing, fed into a preheated extruder at an elevated temperature, e.g., 400°-450°F, and extruded to produce molding pellets. In another procedure, the aforementioned components are mixed with the polyester resin by blending at ordinary temperatures, then the blend is fluxed on a mill, heated, e.g., at 450°-550°F, cooled and chopped.

It should be understood that the composition obtained according to this invention may contain one or more conventional additives such as, for example, antioxidants, carbon black, reinforcing agents, plasticizers, lubricity promoters, color stabilizers, ultraviolet absorbers, X-ray opacifiers, dyes, pigments, fillers, mold release agents and the like. Satisfactory thermal, oxidative and/or ultraviolet stabilizers comprise phenols and their derivatives, amines and their derivatives, compounds containing both hydroxyl and amine groups, hydroxyazines, oximes, polymeric phenolic esters and salts of multivalent metals in which the metal is in its lower state. Preferred hindered phenols useful in this invention include 2,6-di-tert-butyl-4-methyl-phenol, commonly known as GHT (sold under the tradename Ionol by Shell Chemical Co.); 4,4-methylene bis (2,6-di-tert--butylphenol) and 2,6-di-tert-butyl-4-n-butylphenol (sold under the tradename Ethyl 702 and Ethyl 744, respectively, by Ethyl Corp.); and tetrakis [methylene 3-(3', 5'-di-tert-butyl-4'-hydroxyphenyl) propionate]-methane and stearyl-3-(3',5'-di-tert-tertbutyl-4'-hydroxy-phenyl) propionate (sold under the tradenames Irganoz 1010 and Irganox 1076, respectively, by Ciba-Ceigy).

The composition of the present invention can optionally include a glass reinforcing agent, preferably a fibrous glass flament. Generally, these filaments may be used in amounts ranging from about 10 weight percent to about 65 weight percent, preferably from about 15 to about 55 weight percent, and most preferably from about 20 to about 45 weight percent add - on of the total weight of the composition.

## DESCRIPTION OF THE PREFERRED EMBODIMENT

In the examples all parts and percentages are on a weight basis unless otherwise specified.

In all the examples, the compositions were prepared by melt blending the polyester and the indicated additional components using a Prodex single screw extruder at approximately 470°F. Test specimens were prepared by injecting molding in accordance with proper specifications for ASTM and UL determinations.

Flammability tests were performed following the procedure of Underwriter's Laboratory Bulletin 94 entitled "Tests for Flammability of Plastic Materials, UL94". According to this procedure, the materials were dassified as either UL94 HB, UL94 V-O, UL94 V-I or UL94V-II on the basis of the test results obtained for five samples.

The rating "V-O" applies when, in a sample placed so that its long axis is 90 to the flame, the average period of flaming and/or smoldering another removing the igniting flame does not exceed five seconds and none of the vertically placed samples produces drips of particles which ignite absorbent cotton exceed twenty-five seconds and none of the vertically placed samples produces drips of particles which ignite absorbent cotton.

V-II: In a sample placed so that its long axis is 90 to the flame, the average period of flaming and/or smoldering after removing the igniting flame should not exceed twenty-five seconds and the vertically placed samples produce drips of burning particles which ignite cotton.

Comparative example 1 illustrates a composition falling outside the scope of the invention.

### COMPARATIVE EXAMPLE 1

A composition was prepared consisting of the weight percentages indicated in TABLE 1 of "PBT" (poly (1,4-butylene terephthalate) (Valox® 315 from General Electric company) having a number average molecular weight of 50,000; glass fiber, talc; a brominated polystyrene flame retardant (indicated as "BPS" in TABLE 1), which contains 68% bromine and is sold by Ferro Corp. under the trademark Pyrocheck® C68PB; antimony oxide (A.O.C.); a Teflon concentrate drip inhibitor agent (Teflon 6); a polyetherimide ester elastomer resin (PEIE) in particular, a polybutylene terephthalate imide capped poly propylene glycol copolymer sold by General Electric Company under the trademark LOMOD®J10, having a flexural modulus of 10,000 psi.; Irganox® 1076 stabilizer (STAB 1); and a Ba, Na organophosphate stabilizer (STAB 2), sold by the Ferro Corp. under the tradename UVCHECK AM 595. The resulting polymeric composition was formed, by injection molding, into test bars measuring 2.5 inches X 1/2 inches X 1/8 inch. The samples were observed for extrusion integrity and were tested for strand break as per ASTM standards and for flammability standards per the test procedure set forth in Underwriters Laboratories UL94 Bulletin. The test results are set forth in Table II below.

## EXAMPLE 1

Example 1 utilizes the components of Comparative Example 1 but it is exemplary of the present invention, in that 2 weight percent of the PBT component was replaced with a 20/80 (by weight) mixture of neopentyl (diallyl) oxy, tri (dioctyl) phosphate titanate, and ethylene vinylacetate and is designated in TABLE I as "NAT". This Example, which was formulated as per Table I, were molded into test bars of the same dimensions as in Example 1. These test bars were subjected to the UL - 94 test and the results as set forth in TABLE II. Furthermore, these bars were tested for various physical properties, the results of which tests are also set forth in TABLE II. All parts in TABLE I are listed in terms of percent by weight. The resulting composition was tested as per the procedure of Comparative Example 1.

EXAMPLE 1 dearly demonstrates the effects of 2% NAT which significantly enhances the strand integrity of the composition.

## COMPARATIVE EXAMPLES 2 AND 3

Comparative Example 2 utilizes the same components that are used for Example 1, with the exception that the polyetherimide ester resin utilized in Example 1 was replaced with a copolyetherester elastomer resin (CPE) which is a copolymer of polybutylene terephthalate with 1,6-hexanediol and a polyterabutylene ether soft block and having a flexural modulus of about 20,000 psi, sold by General Electric Company under the trademark LOMOD®B. Comparative Example 3 basically repeats the formulation of Comparative Example 2, except that the NAT was not utilized.

The resulting compositions were subject to the same tests as were the compositions of Comparative Example 1, the results of which are set forth in TABLE II below.

**TABLE I**

| | Example No. | | | |
|---|---|---|---|---|
| Component | 1 | 2 | 3 | 4 |
| PBT | 25.65 | 23.65 | 23.65 | 25.65 |
| glass fiber | 25.00 | 25.00 | 25.00 | 25.00 |
| talc | 20.00 | 20.00 | 20.00 | 20.00 |
| BPS | 10.00 | 10.00 | 10.00 | 10.00 |
| STAB 1 | 0.15 | 0.15 | 0.15 | 0.15 |
| PEIE | 15.00 | 15.00 | - | - |
| Teflon Conc. | .50 | 0.50 | 0.50 | 0.50 |
| A.O.C | 3.50 | 3.50 | 3.50 | 3.50 |
| STAB 2 | 0.20 | 0.20 | 0.2 | .20 |
| NAT | - | - | 2.00 | - |
| CPE | - | - | 15.00 | 15.00 |

a) 85% antimony trioxide and 15% polyolefin carrier

**TABLE II**

**Example No.**

| Test | 1 | 2 | 3 | 4 |
|---|---|---|---|---|
| Melt Viscosity Poise, @ 510 F | 8130 | 6980 | 9010 | 13,330 |
| UL94@ 1/16", aged | VO | VO | VO | VO |
| Extrusion Integrity (strand break) | poor 2 | excellent 0 | excellent 0 | poor 3 |

The above examples indicate that in the polyetherimide ester resin was utilized in place of the viscosity were realized. The example of the invention, Example 1, displayed the best processability characteristics of the compositions that were prepared.

## Claims

1. A flame retardant polyester composition comprising
   (a) thermoplastic polyester resin of the formula

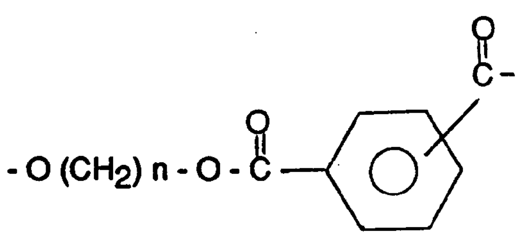

   wherein n is an integer of from 2 to 10, having a number average molecular weight of 10,000 to 70,000;
   (b) halogenated flame retardant;
   (c) a silicate mineral filler;
   (d) a neoalkoxy titanate compound; and
   (e) a polyetherimide ester resin.

2. The composition as defined in Claim 1 wherein said polyester resin is poly(butylene terephthalate) ester.

3. The composition of Claim 1 wherein the said polyester resin is a mixture of poly(1,4-butylene terephthalate) and poly(ethylene terephthalate) ester resins.

4. The composition of any preceding claim wherein the amount of halogenated flame retardant ranges from 3 to 50 parts by weight per one hundred parts by weight of the total composition.

5. The composition of any preceding claim wherein said polyester resin is present in the amount of at least 15 parts by weight of the total composition.

6. The composition of any preceding claim wherein the amount of neoalkoxy titanate ranges from 0.02 to 1.5 parts by weight per one hundred parts by weight of the total composition.

7. The composition of any preceding claim wherein the silicate mineral filler is present in an amount ranging from 10 to 60 parts by weight of the total composition.

8. The composition of any preceding claim wherein the amount of polyetherimide ester resin ranges from 5 to 30 parts by weight per one hundred parts by weight of the total composition.

**9.** The composition of any preceding claim wherein said polyetherimide ester is comprised of the reaction products of :
(a) a diol;
(b) a dicarboxylic acid or an ester forming derivative thereof; and
(c) a material selected from
(1) (i) a set of reactants comprising a high molecular weight poly(oxyalkylene) diamine, and (ii) a tricarboxylic acid or ester forming derivative thereof, or
(2) a high molecular weight polyoxyalkylenediimide diacid.

**10.** The composition of Claim 9 wherein said diol is selected from butanediol, butenediol, hexanediol, cyclohexane dimethanol, or mixtures thereof.

**11.** The composition of Claim 9 wherein said dicarboxylic acid or its derivative is an aromatic dicarboxylic acid or an ester forming derivative.

**12.** The composition of Claim 9 wherein (c) is (1).

**13.** The composition of Claim 12 wherein said poly(oxyalkylene) diamine has an average molecular weight of from about 600 to about 12,000.

**14.** The composition of Claim 12 wherein said tricarboxylic acid or ester forming derivative thereof is trimellitic anhydride.

**15.** The composition of Claim 9 wherein (c) is (2).

**16.** The composition of any preceding claim further comprising a glass reinforcing agent.

**17.** The composition of Claim 16 wherein the glass reinforcing agent is glass filaments.

**18.** The composition of Claim 17 wherein the glass filaments are used in amounts ranging from 10 weight percent to 65 weight percent add-on of the weight of the total composition.

European Patent Office

# EUROPEAN SEARCH REPORT

Application Number

EP 92 31 1052

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 392 190 (GENERAL ELECTRIC COMPANY)<br>* page 3, line 27 - line 31; claims 1-9 * | 1-5,8-18 | C08L67/02<br>C08K13/02<br>C08L79/08<br>//(C08L67/02, 79:08)<br>(C08K13/02, 5:02,3:34,5:05) |
| A | EP-A-0 191 283 (GENERAL ELECTRIC COMPANY)<br>* page 17, line 33 - line 36; claims 1-33 * | 1-5,7-18 | |
| A | GUMMI, FASERN, KUNSTSTOFFE. INTERNATIONALE FACHZEITSCHRIFT FUR DIE POLYMER-VERARBEITUNG<br>vol. 39, no. 5, May 1986, STUTTGART DE<br>pages 242-4 - 247-8<br>S. J. MONTE 'Neoalkoxy-Titanate und -Zirkonate als Kupplungsmittel'<br>* paragraph 3.8 * | 1 | |
| A | FR-A-2 376 184 (BASF WYANDOTTE CORPORATION)<br>* claims 1-7 * | 1 | |
| P,A | DATABASE WPIL<br>Week 9239,<br>Derwent Publications Ltd., London, GB;<br>AN 92-316530<br>& CA-A-2 033 946 (LIU P. Y.) 11 July 1992<br>* abstract * | 1-18 | TECHNICAL FIELDS SEARCHED (Int. Cl.5)<br>C08L<br>C08K |

The present search report has been drawn up for all claims

| Place of search | Date of completion of the search | Examiner |
|---|---|---|
| THE HAGUE | 20 APRIL 1993 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)